# EUROPEAN PATENT APPLICATION

(11) **EP 4 559 649 A1**
(43) Date of publication of application: **28.05.2025**
(21) Application number: 23841499.9
(22) Date of filing: 24.04.2023
(51) Int. Cl.: B27K 5/00, B27D 1/04, B27M 1/08

(54) **LAMINATED MATERIAL, METHOD FOR PRODUCING SAME, AND USE APPLICATION OF SAME**

(30) Priority: 19.07.2022 WO PCT/JP2022/028037
(71) Applicant: Daicel Corporation, Osaka-shi, Osaka 530-0011 (JP); Kyoto University, Kyoto-shi, Kyoto 606-8501 (JP)
(72) Inventor: WATANABE, Takashi, Kyoto-shi, Kyoto 606-8501 (JP); KOBAYASHI, Naoko, Kyoto-shi, Kyoto 606-8501 (JP); HASHIZUME, Tomohiro, Tokyo 108-8230 (JP); NISHIURA, Hiroki, Tokyo 108-8230 (JP)
(74) Representative: Hoffmann Eitle
(86) International application number: PCT/JP2023/016153
(87) International publication number: WO 2024/018714

(57) **Abstract**

A laminated material includes a first base material, and a sheet material laminated on and integrated with a surface of this first base material. The first base material is made of a material selected from the group consisting of a biomass material, a plastic, a metal, a ceramic, a glass, a molded pulp, and a paper. The sheet material is substantially made of a plant-derived component. The sheet material has an absorption peak in a region of 1715 to 1725 cm⁻¹ in an infrared absorption spectrum. The sheet material can be produced by removing a liquid component from a lignocellulose solution produced by dissolving a plant raw material in an organic acid. A laminated material is produced by laminating the sheet material on a surface of the first base material, and thermocompression-bonding the sheet material and the first base material. The method for modifying a surface of a molded article includes laminating the sheet material on a surface of a molded article, and thermocompression-bonding the sheet material and the molded article. An adhesive agent contains a lignocellulose solution or a sheet material.

## Description

### Technical Field

The present disclosure relates to a laminated material. In particular, the present disclosure relates to a laminated material using a plant material, and a surface modification method.

### Background Art

In the related art, plant materials such as wood have been used for various purposes such as building materials and constituting members for furniture. In particular, use of high-grade wood that is beautiful and that provides appearance with a sense of luxury and a good sense of touch has been preferred for a surface layer of the member; however, in general, high-grade wood is expensive. Furthermore, due to depletion of forest resources of recent years, acquisition of high-grade wood has been difficult. Furthermore, wood is difficult to be compression-molded and needs to be processed by cutting.

In the related art, techniques of bonding a thin slice of wood to various base materials have been described. For example, JP H05-035208 UM-A (Patent Document 1) proposes a decorative board having a feel of higher-grade wood by engraving a pseudo vessel groove, which is different from its original surface vessel groove, on a surface of a wood board without covering up the original surface vessel groove. JP H05-050408 A (Patent Document 2) describes a decorative building material on which a woodgrain pattern imparting a sense of luxury to a surface of a wooden board is formed by: forming woodgrain-like recesses and protrusions by application of a pressure onto the surface of the wooden board; and coloring. JP H08-060800 A (Patent Document 3) proposes a composite wooden pillar including square pillar-like core wood in the center and board-like covering wood around this core wood, and the core wood and the covering wood are bonded and integrated. Patent Document 3 describes a technology that provides a high-quality wooden pillar at a low cost by using high-grade wood as the covering wood.

JP 2017-018543 A (Patent Document 4) describes a recovery method of chests of drawers made of a solid wood board, the method including disassembling and breaking down an old-type large-sized furniture having deteriorated wood into parts, polishing a solid wood board surface of each of the parts, and then assembling the parts to form furniture. JP 2017-176992 A (Patent Document 5) proposes a scratch repairing coating method that repairs a scratch on a surface of woody material. This method includes a putty applying process, a flush surfacing process, a hardening process, a surface polishing process, a sealing agent applying process, a sealing agent removing process, and a coloring process. JP 3956375 B (Patent Document 6) describes a scratch repairing method of a wood product, the method including a process of charging a filler containing a synthetic resin material to a scratched part of the wood product, and a process of applying an instantaneous adhesive agent and a curing accelerator for an instantaneous adhesive agent on and around a surface of this filled part.

Meanwhile, (binder-less) woody material that does not use an adhesive agent has been also studied. For example, JP 2008-260238 A (Patent Document 7) describes a plant fiber molded article obtained by a mat formation process that forms a mat containing plant fibers, a steam treatment process of exposing the mat to water vapor at a temperature of 150°C or higher, and a molding process of obtaining a molded article by shaping the steam-treated mat while pressure is applied onto the steam-treated mat.

JP 2014-019033 A (Patent Document 8) proposes an oil palm molded body obtained by superimposing a plurality of oil palm thin boards in a manner that fiber directions are intersecting each other, and then applying a compressive force in a direction orthogonal to a face of the layered oil palm thin boards. JP 2018-064934 A (Patent Document 9) describes a laminated board originated from a birch bark, the laminated board having layers fixed to each other by an adhesive bond generated by heat introduction.

Because environmental pollution has become increasingly severe in recent years, molded pulp is attracting attention as a material that can achieve plastic reduction. The molded pulp is a paper molded article that can be obtained by dissolving plant fibers (mainly waste paper) in water, allowing the plant fibers to be entangled with each other, subjecting the plant fibers to papermaking using a mold, and then drying, and the molded pulp is mainly used as a packaging container. Furthermore, to obtain a molded pulp having a thinner and more complicated shape, a shaping technique that utilizes a thermoformed mold has been proposed; however, because the molded pulp is paper and has water permeability and air permeability, there is a problem in that the technology cannot be used depending on the use.

As a material having suppressed water permeability and air permeability, JP 2000-309322 A (Patent Document 10) describes a water-proof molded pulp container including a waterproofing layer obtained by laminating a synthetic resin film layer on one face of a molded pulp article and laminating a synthetic resin film layer on the other face, or obtained by applying a waterproofing coating.

### Citation List

### Patent Document

Patent Document 1: JP H05-035208 UM-A
Patent Document 2: JP H05-050408 A
Patent Document 3: JP H08-060800 A
Patent Document 4: JP 2017-018543 A
Patent Document 5: JP 2017-176992 A
Patent Document 6: JP 3956375 B
Patent Document 7: JP 2008-260238 A
Patent Document 8: JP 2014-019033 A
Patent Document 9: JP 2018-064934 A
Patent Document 10: JP 2000-309322 A

### Summary of Invention

### Technical Problem

According to the technologies of Patent Documents 1 and 2, a desired sense of luxury can be exhibited for a ceiling material or the like that is visually observed by the naked eye from a distance that is not less than 1 m; however, for example, for furniture, doors and windows, and the like that are visually observed within 30 cm, a strong artificial impression is given and it looks unnatural, and thus a sense of luxury as natural wood is sometimes not achieved. According to the technology of Patent Document 3, although a product that is almost 100% woody material except the adhesive agent and that has an appearance similar to high-grade wood can be provided, a problem remains in that high-grade wood having a size suitable for a covering material is expensive and difficult to obtain.

The methods described in Patent Documents 4 to 6 use non-woody materials such as a coating, an adhesive agent, a putty, and a sealer. Because of this, these products are not 100% plant materials and cannot be displayed as solid wood. Furthermore, for example, a synthetic adhesive agent derived from petroleum such as an isocyanate-based adhesive agent is used for bonding woods. Also in a case where wood (a thinly sliced board or the like) is bonded to a surface of plastic, a metal, a ceramic material, or the like, a synthetic adhesive agent is used. Thus, there are concerns about odor due to the adhesive agent, and the so-called sick building syndrome caused by contained chemical substances. Furthermore, there is also a possibility of causing a toxic gas by incineration treatment because cut pieces (sawdust) of these products also contain an adhesive agent.

Patent Documents 7 to 9 proposes woody materials that do not use adhesive agents; however, because action of lignin, hemicellulose, or a trace component in a bark is utilized as an adhesive component, adequate adhesive strength is sometimes not achieved. Furthermore, although adhesive strength is improved by steam heating, there is trouble of a process being more complicated due to need for a dehydration process and a drying process thereafter.

Furthermore, because a synthetic resin film is also used in the technology described in Patent Document 10, a product that is 100% derived from biomass cannot be obtained, and biodegradability is generally poor. A technology that provides a product that is 100% derived from biomass while air permeability and water permeability of the molded pulp are improved has not been proposed yet.

An object of the present disclosure is to provide a technology that laminates and bonds a sheet material made of 100% plant material to a variety of base materials without use of an adhesive agent containing a synthetic resin, an organic solvent, and the like. Another object of the present disclosure is to provide a laminated material that does not contain an organic solvent and the like and that has good appearance originated from the plant material, and a method for producing the laminated material. Yet another object of the present disclosure is to provide a technology that bonds various base materials by using a sheet material that is 100% derived from biomass and that has excellent biodegradability, without use of an adhesive agent containing any synthetic resins, organic solvents, and the like. Yet another object of the present disclosure is to provide a method that can modify a surface of a molded wood product without use of an organic solvent and the like.

### Solution to Problem

A laminated material of the present disclosure includes a first base material, and a sheet material laminated on and integrated with a surface of the first base material. The first base material is made of a material selected from the group consisting of a biomass material, a plastic, a metal, a ceramic, a glass, a molded pulp, and a paper. The sheet material is substantially made of a plant-derived component. The sheet material has an absorption peak in a region of 1715 to 1725 cm⁻¹ in an infrared absorption spectrum.

The sheet material may have a density of 0.2 g/cm³ or greater and 1.2 g/cm³ or less.

The plant-derived component may be one or two or more selected from the group consisting of cellulose, hemicellulose, and lignin. Some or all of hydroxy groups contained in the cellulose, the hemicellulose, and the lignin may be formylated.

The sheet material may contain a di- or higher valent fatty acid and/or an anhydride thereof.

The laminated material may further include a second base material laminated and bonded to a first base material by interposing the sheet material in between the first base material and the second base material. The second base material may be made of a material selected from the group consisting of a biomass material, a plastic, a metal, a ceramic, a glass, a molded pulp, and a paper.

From other viewpoints, the present disclosure relates to a sheet material used for any of the laminated materials described above.

A method for producing any of the laminated material described above includes:
(1) producing a lignocellulose solution by dissolving a plant raw material in an organic acid;
(2) producing a sheet material substantially made of a plant-derived component by removing a liquid component from the obtained lignocellulose solution; and
(3) producing a laminated material including the sheet material integrated with the first base material by laminating the sheet material on a surface of the first base material and thermocompression-bonding the sheet material and the first base material. This production method may further include polishing the first base material before the sheet material is laminated.

From other viewpoints, the method for producing the laminated material includes:
(1) producing a lignocellulose solution by dissolving a plant raw material in an organic acid;
(2) producing a sheet material substantially made of a plant-derived component by removing a liquid component from the produced lignocellulose solution; and
(3) laminating and bonding the first base material and the second base material by placing the sheet material in between the first base material and the second base material and thermocompression-bonding the sheet material, the first base material, and the second base material. This production method may further include polishing the first base material and the second base material before the sheet material is placed.

The plant raw material may be a woody biomass, a herbaceous biomass, or a mixture thereof. The organic acid may be one or two or more selected from the group consisting of formic acid, glyoxylic acid, and pyruvic acid.

The temperature at which the plant raw material is dissolved in the organic acid may be 40°C or higher and 80°C or lower. The temperature of the thermocompression-bonding may be 220°C or lower.

Furthermore, from other viewpoints, the present disclosure relates to a method for modifying a surface of a molded article. This method for modifying a surface includes:
(1) producing a lignocellulose solution by dissolving a plant raw material in an organic acid;
(2) producing a sheet material substantially made of a plant-derived component by removing a liquid component from the produced lignocellulose solution; and
(3) laminating the sheet material on a surface of a molded article, and thermocompression-bonding the sheet material and the molded article.

The adhesive agent of the present disclosure contains:
a lignocellulose solution produced by dissolving a plant raw material in an organic acid, and/or
a sheet material substantially made of a plant-derived component, the sheet material produced by removing a liquid component from the lignocellulose solution. The plant raw material may be a woody biomass, a herbaceous biomass, or a mixture thereof. The sheet material may contain a di- or higher valent fatty acid and/or an anhydride thereof. The organic acid may be one or two or more selected from the group consisting of formic acid, glyoxylic acid, and pyruvic acid.

From other viewpoints, the adhesive agent of the present disclosure contains a lignocellulose solution produced by dissolving a plant raw material in an organic acid. The lignocellulose solution contains a plant-derived component, and the plant-derived component is one or two or more selected from the group consisting of cellulose, hemicellulose, and lignin. Some or all of hydroxy groups contained in the cellulose, the hemicellulose, and the lignin may be formylated.

### Advantageous Effects of Invention

According to the production method of the present disclosure, as a raw material of a lignocellulose solution and a sheet material, various plant materials such as small pieces of wood or wood flour can be used. Thus, even when the material of the base material is low quality wood, a laminated material having a desired sense of luxury can be produced by laminating, on a base material, a sheet material produced by using wood flour generated at the time of sawing high-grade wood as the plant raw material. Furthermore, this sheet material does not use a chemical agent such as an adhesive agent and can be integrated with a base material made of various materials by bonding. According to the present disclosure, a laminated material that has a sense of touch and good appearance originated from a plant raw material and that has no remaining of an organic solvent or the like can be provided. Furthermore, by laminating this sheet material, a surface of a molded article made of various materials can be modified without use of a chemical agent such as an adhesive agent. Furthermore, according to the present disclosure, an adhesive agent containing no organic solvent can be provided.

### Brief Description of Drawings

FIG. 1 is an appearance photograph of a laminated material of Example 85.
FIG. 2 is an appearance photograph of a laminated material of Example 87.
FIG. 3 is an appearance photograph of Example 41.
FIG. 4 is an appearance photograph of a laminated material of Example 43.
FIG. 5 is an appearance photograph of a base material used for production of laminated materials of FIGS. 1 and 2.
FIG. 6 is an appearance photograph of a base material used for production of laminated materials of FIGS. 3 and 4.
FIG. 7 is an appearance photograph of a sheet material of Production Example 1.
FIG. 8 is an appearance photograph of a sheet material of Production Example 2.
FIG. 9 is an appearance photograph of a sheet material of Production Example 5.
FIG. 10 is an electron micrograph (magnification: 500 times) showing a surface state of a sheet material of Production Example 1.
FIG. 11 is an electron micrograph (magnification: 500 times) showing a surface state of a sheet material of Production Example 4.
FIG. 12 is an appearance photograph of a laminated material of Example 130.
FIG. 13 is an appearance photograph of a laminated material of Example 131.
FIG. 14 is an appearance photograph of a laminated material of Example 133.
FIG. 15 is an appearance photograph of a laminated material of Example 137.
FIG. 16 is an appearance photograph of a laminated material of Example 138.
FIG. 17 is an appearance photograph of a laminated material of Example 139.
FIG. 18 is an appearance photograph of a laminated material of Example 142.
FIG. 19 is an appearance photograph of a sheet material of Production Example 8.
FIG. 20 is an appearance photograph of a sheet material of Production Example 9.
FIG. 21 is an appearance photograph of a sheet material of Production Example 10.

### Description of Embodiments

Hereinafter, an example of a preferred embodiment will be specifically described. Each of the configurations, combinations thereof, and the like in each of the embodiments is an example, and various additions, omissions, substitutions, and other changes of the configurations may be made as appropriate without departing from the spirit of the present disclosure. The present disclosure is not limited by the embodiments and is limited only by the claims. Each aspect disclosed in the present specification can be combined with any other feature disclosed herein.

Note that, in the present disclosure, "from X to Y" indicating a range means "X or more and Y or less". Furthermore, unless otherwise noted, testing temperatures are all at room temperature (20°C ± 5°C), wt.% means weight percent and does not mean a mass concentration. Furthermore, "ton (t)" that is a unit of mass means "metric ton".

### Laminated Material

The laminated material of the present disclosure includes a base material, and a sheet material laminated on and integrated with a surface of the base material. For example, the laminated material of the present disclosure preferably includes a sheet material in such a manner that a main face of at least one surface of the base material is in contact, laminated, and integrated with a main face of a surface of the sheet material. In the present disclosure, a face having a largest contact area between a base agent and a sheet material is referred to as "main face". The number of base material and sheet material included in the laminated material is not particularly limited, and a plurality of base materials and sheet materials may be laminated alternately and integrated. In other words, the laminated material of the present disclosure has a layered structure made of a substrate (or substrates) and a sheet material (or sheet materials). For example, the laminated material may include a first base material, and a sheet material laminated on and integrated with a surface of the first base material, and also may include a first base material, and a second base material laminated and bonded to the first base material by interposing a sheet material between the first base material and the second base material.

Note that, in the present disclosure, for convenience, in an embodiment where base materials are bonded to both faces of a sheet material, one is called "first base material" and the other is called "second base material", and this does not limit the laminated material of the present disclosure to a two-layered structure or a three-layered structure. The laminated material may include a layer other than the sheet material and the base material in a range that can achieve effects of the present disclosure.

Note that "sheet material" means a flat plate-like member having a small thickness and is a concept including the so-called sheets and films. Furthermore, "laminated and integrated" does not mean a state where a base material and a sheet material are simply overlaid but means a state where the sheet material is firmly bonded to a surface of a base material. As long as the sheet material and the base material are firmly bonded, the interface between the base material and the sheet material may be clear or unclear. "Laminated and bonded" means a state where a first base material and a second base material are firmly bonded (that is, integrated) by interposing a sheet material in between the first base material and the second base material.

As described below, this laminated material is produced without use of chemical substances such as an adhesive agent and is produced by thermocompression-bonding a base material and a sheet material. The sheet material can be formed as described below by removing a liquid component from a lignocellulose solution produced by dissolving a plant raw material in an organic acid. Because the organic acid is removed as a liquid component, this sheet material is substantially made only of a plant-derived component. For example, in a case where a plant material is used as a base material, a laminated material substantially made of a plant-derived component and the plant material can be produced.

In the present disclosure, "substantially" means that, for example, a content of a plant-derived component in a sheet material is 90 wt.% or greater, preferably 95 wt.% or greater, and ideally 100 wt.%. In a case where a plant material is used as a base material, the total content of the plant material and a plant-derived component in a laminated material is 90 wt.% or greater, preferably 95 wt.% or greater, and ideally 100 wt.%. In this case, the laminated material can be said to be 100% plant material.

According to the present disclosure, a laminated material of 100% plant material can be produced; however, a sheet material or a laminated material may contain a component other than the plant-derived component and the plant material, as long as the effects of the present disclosure are not impaired. For example, in a case where a desired function is imparted to the laminated material, the sheet material may contain a known additive. Examples of such an additive include an electroconductive agent, a magnetic powder, an antimicrobial agent, a flame retardant, an antioxidant, and a UV absorber.

By adding an electroconductive agent to the sheet material, a laminated material that can suppress accumulation of static electricity and that can reduce electrostatic discharge in the dry season can be produced. Furthermore, by adding a magnetic powder to the sheet material, a laminate that can be attracted and fixed by a magnet, or a laminate that can shield an electromagnetic wave emitted from the sun, electronic devices, or the like can be produced. A laminated material produced by adding an antimicrobial agent to the sheet material can be used in the sanitary and toiletry fields that are required to have antimicrobial and antiviral properties and for use in hygienic materials. Furthermore, by addition of the antimicrobial agent, effects of suppressing change in appearance due to biodegradation of the laminated material itself and proliferation of bacteria and fungi can be provided. A laminated material produced by adding a flame retardant to the sheet material can be used for the field of architecture to which fire resistance and the like are required. A laminated material produced by adding an antioxidant and/or a UV absorber to the sheet material can be used for the field of architecture to which weather resistance, light resistance, and the like are required.

According to the present disclosure, a laminated material of 100% plant material can be produced; however, a sheet material or a laminated material may contain a di- or higher valent fatty acid and/or an anhydride thereof as a component other than the plant-derived component and the plant material. In a case where a glossy appearance is desired for the laminated material while surface modification is performed, and/or in a case where integration of the base material and the sheet material is desired to be performed under milder conditions, the sheet material preferably contains a di- or higher valent fatty acid and/or an anhydride thereof. Among the organic acids described above, a di- or higher valent fatty acid that is not completely removed as a liquid component from a lignocellulose solution is preferred. Note that specific di- or higher valent fatty acid will be described in detail in the section of "Sheet Material".

### Base Material

Hereinafter, description regarding "base material" can be also read as description related to "first base material" and "second base material".

The material of the base material is not particularly limited as long as the material is firmly bonded to a sheet material. The materials of the first base material and the second base material may be the same or different. As described below, the sheet material of the present disclosure contains a plant-derived component in which some or all of hydroxy groups are formylated. It is conceived that, because a plant-derived formylated component such as lignin and hemicellulose exhibits hydrophobicity, even when a material of the base material is oleophilic, the plant-derived formylated component exhibits firm adhesiveness by being activated when heated. For example, the material of the base material may be selected from the group consisting of a biomass material, a plastic, a metal, a ceramic, a glass, a molded pulp, and a paper. As necessary, the surface of the base material may be corona-treated.

In the present disclosure, the type of the plastic used for the base material is not particularly limited. For example, a polyethylene, a polypropylene, an acrylonitrile-butadiene-styrene copolymer (ABS), a polystyrene, a polymethyl methacrylate, a polylactic acid, a polyether ether ketone resin (PEEK), a polycarbonate, a polyurethane, a polyester, a polyethylene phthalate (PET), and a liquid crystal polymer (LCP) can be used. The plastic may be foam. A polyethylene is suitably used.

As the metal to be used in the base material of the present disclosure, iron, stainless steel, nickel, copper, silver, gold, aluminum, tin plate, and the like can be used. Furthermore, as the ceramic, ceramics such as pottery can be used.

From the viewpoint of producing a laminated material made of a plant material, preferred materials of the base material are paper, molded pulp, and biomass materials. The paper may be kraft paper, may be pulp originated from hardwood (LBKP), and may be pulp originated from softwood (NBKP). The pulp originated from softwood (NBKP) can be widely applied and is preferred because of its toughness and being hard to be broken even when it is thin, and because of high strength. Based on the relationship between the desired strength and cost, pulp originated from hardwood (LBKP) may be employed and a mixture of pulp originated from softwood (NBKP) may be employed.

The pulp molding may be thick wall molding such that the resultant pulp has a film thickness of 5 to 10 mm, thermoformed molding, may be pulp injection molding (PIM), or may be pulp foaming (PF), and for example, can be appropriately selected based on the desired withstand load or the like. From the viewpoint of producing the base material having a large film thickness and a high load bearing, thick wall molding can be suitably used. In a case of the thick wall molding, the pulp material absorbed and laminated in a shaping mold can be dried and solidified as it is without performing press-molding. In this case, the sheet material of the present disclosure can be bonded to a smooth face absorbed onto the shaping mold. By this, molded pulp having a modified surface can be produced.

PIM is a technique that molds pulp by injection molding. Molded pulp having a mating structure or a complicated structure, such as a boss and a rib, can be produced as the base material. In this case, the sheet material of the present disclosure is placed in the mold in advance, and pulp fibers blended with starch as a binding agent can be injected into a molding machine as raw materials of the base material. In detail, after raw materials for the base material are charged in the mold in which the sheet material is placed, moisture inside the raw materials for the base material is removed for drying by repeating subtle opening and closing movement of the mold, and the sheet material is heated. After the raw materials for the base material are dried, by taking out the molded article solidified by cooling the mold, surface-modified molded pulp can be produced. Furthermore, the base material used in the present disclosure may be a foam product produced by mixing paper powder, starch for industrial use, and a synthetic resin and extrusion-molding the mixture by foaming utilizing water vapor. This foam product is more environmentally advantageous compared to other plastic foams and has an advantage in that the foam product can be used in a similar manner as known plastic foam products. By modifying a surface of the molded article made of this foam product using the sheet material of the present disclosure, more preferred appearance and sense of touch can be imparted to a molded article having a desired shape.

The biomass material may be woody biomass, may be herbaceous biomass, and may be a mixture thereof. Examples of the herbaceous biomass include sugar cane bagasse, rice straw, wheat, wheat bran, tomato, onion, and *Phyllostachys edulis.*

A typical woody biomass is wood. The type of the wood is not particularly limited and may be hardwood or may be softwood. Furthermore, the part of wood is not particularly limited, and may be any of heartwood, sapwood, and intermediate wood. Furthermore, the part may be a part having a node, a black streak, discoloration, and the like, or may be a part with rough tissues and lacking good appearance. According to the present disclosure, even when the material of the base material is low-grade wood having an appearance that is typically not used as an exterior material, by being laminated and integrated with the sheet material, a laminated material having a beautiful appearance with a sense of luxury can be formed.

A wooden board or glued laminated wood may be used as the base material as long as the effects of the present disclosure are not impaired. In the related art, the wooden board is a material produced by mixing and hot-press molding small pieces of wood with an adhesive agent such as a urea-melamine-based resin or a modified phenol resin. The glued laminated wood is a material produced by bonding small pieces of wood with an adhesive agent such as a resorcinol resin or a water-based polymer isocyanate-based adhesive agent. However, as the base material of the present disclosure, a wooden board or glued laminated wood using the adhesive agent of the present disclosure described below is preferably used. For example, it is conceived that, in the wooden board produced by using a "lignocellulose solution produced by dissolving a plant raw material in an organic acid" as the adhesive agent, the organic acid is vaporized due to heating at the time of bonding. Furthermore, as described below, the adhesive agent of the present disclosure contains a plant-derived component in which some or all of hydroxy groups are formylated, such as lignocellulose. Even if a part of the formylated lignocellulose is decomposed, the products thereof is formic acid, lignin, cellulose, and hemicellulose, which do not negatively affect the natural environment. Such a base material can be safely buried or incineration-treated at the time of disposal because cut pieces (sawdust in a case of wood) do not contain an adhesive agent as the so-called chemical agent.

As the raw material of the wooden board and the glued laminated wood, small pieces produced by cutting and shredding demolition debris, timber from forest thinning, and the like are mainly used. By the fine shredding, properties intrinsic to live trees are lost, resistance becomes weaker, and mold tends to grow; however, these problems are mitigated by laminating and integrating the sheet material of the present disclosure. A laminated material including the wooden board or the glued laminated wood as the base material and including the sheet material laminated and integrated with this base material has excellent durability. In particular, the laminated material including the wooden board or the glued laminated wood produced by using the adhesive agent of the present disclosure as the base material is a material that is 100% plant material and that has excellent biodegradability. As the raw material of the wooden board and the glued laminated wood, the herbaceous biomass described above can be also used.

The type of the wooden board is not particularly limited. For example, a fiberboard produced by molding fibrous wood pieces, a particle board produced by molding chip-like wood pieces, an oriented strand board (OSB), a parallel-strand lumber (PSL), and oriented strand lumber (OSL) can be appropriately selected. The fiberboard may be a medium-density fiberboard (MDF), may be a hard fiberboard (hardboard), and may be a soft fiberboard (insulation board).

The type of glued laminated wood is not particularly limited. In terms of classification by the bonding method, any of scarf joint, finger joint, and butt joint may be employed. Bonding by finger joint, which exhibits high adhesive strength, is preferred. Furthermore, cross-laminated timber (CLT) may be employed, laminated veneer lumber (LVL) may be employed, or plywood may be employed. Examples of the tree species of the raw material include Oregon pine fir (Douglas fir), European red pine (red wood), spruce-pine (pine trees)-fir (fir tree) (SPF), *Callitropsis nootkatensis,* hemlock, Japanese cedar, and larch.

### Sheet Material

The sheet material has an absorption peak having a peak top in a region of 1715 to 1725 cm⁻¹ in an infrared absorption spectrum. Absorption at a wave number of from 1715 to 1725 cm⁻¹ is caused by C=O stretching vibration. Specifically, the absorption peak is caused by C=O stretching vibration of an aldehyde group (formyl group). In the present disclosure, the presence of the absorption peak in a region of 1715 to 1725 cm⁻¹ means that some or all of hydroxy groups of cellulose, hemicellulose, and lignin contained in the sheet material as the plant-derived component are formylated. Due to the presence of this absorption peak, the sheet material of the present disclosure is distinguished from those produced by simply cutting wood into a sheet-shape and those produced by forming a sheet shape by accumulating wood flour and the like.

In the infrared absorption spectrum of the sheet material, the peak intensity (peak height) due to C=O stretching vibration is preferably 5% or greater, more preferably 15% or greater, and particularly preferably 30% or greater, compared to the peak intensity in a region of 1000 cm⁻¹ to 1200 cm⁻¹ of cellulose. A larger peak intensity due to C=O stretching vibration indicates a higher degree of formylation, and it is conceived that the plant-derived formylated component contributes to improvement in adhesive strength between the sheet material and the base material.

The infrared absorption spectrum of the sheet material may also include some or all of absorption peaks of OH stretching vibration of cellulose and hemicellulose (approximately 3200 to 3600 cm⁻¹), CH stretching vibration of cellulose, hemicellulose, and lignin (approximately 2840 to 3000 cm⁻¹), skeletal vibration of a lignin benzene ring (approximately 1600 cm⁻¹), C-O stretching vibration of cellulose and hemicellulose (approximately 1060 cm⁻¹), and the like.

The sheet material is substantially made of a plant-derived component. The type of plant is not particularly limited and, for example, may be wood such as softwood (e.g., Japanese cedar, Japanese cypress, Japanese red pine) and hardwood (e.g., eucalyptus, Japanese beech) and may be herbaceous species such as rice, sugarcane, wheat, tomato, onion, and *Phyllostachys edulis.* From the viewpoint of achieving an appearance with a sense of luxury even when the base material is low quality wood, a sheet material made of component derived from the so-called high-grade wood such as Japanese cedar or Japanese cypress is preferred.

In the present disclosure, the plant-derived component may be one or two or more selected from the group consisting of cellulose, hemicellulose, and lignin. The plant-derived component may contain all of cellulose, hemicellulose, and lignin, and these may be contained in the form of lignocellulose. Note that the form of lignocellulose means a form with a higher-order structure in which cellulose, hemicellulose, and lignin are intricately intertwined. Specifically, this form means that celluloses, which are linear polymers, form crystal structures by intramolecular and intermolecular hydrogen bonds and constitute strong microfibrils (cellulose microfibrils), and the cellulose microfibrils are intertwined with hemicelluloses such as xylan and glucomannan, and voids in matrixes of these polysaccharides are charged with lignin, which is an irregular aromatic polymer.

As long as the effects of the present disclosure are achieved, the total content of the cellulose, the hemicellulose, and the lignin (or the content as the lignocellulose) in the sheet material is not particularly limited. From the viewpoint of imparting appearance similar to natural wood, the total content of the cellulose, the hemicellulose, and the lignin may be 90 wt.% or greater, may be 95 wt.% or greater, may be 98 wt.% or greater, and may be 100 wt.%. Some or all of hydroxy groups in the cellulose, the hemicellulose, and the lignin may be formylated.

The total content of the hemicellulose and the lignin in the sheet material is also not particularly limited. From the viewpoints of improvement in adhesiveness to the base material and increase in pencil hardness, the total content of the hemicellulose and the lignin may be 5 wt.% or greater, may be 10 wt.% or greater, and may be 15 wt.% or greater.

The sheet material may contain a plant-derived fibrous substance. By laminating and integrating the sheet material containing the fibrous substance and the base material, a laminated material having excellent durability can be produced. The presence of the fibrous substance can be confirmed by scanning electron microscopic observation.

The fibrous substance in the sheet material may be the cellulose microfibrils described above. For example, the fibrous substance may be cellulose fibers which have not been completely dissolved in the production process of the sheet material. The fibrous substance may have a cellulose I crystal structure. The presence of the cellulose I crystal structure can be confirmed by X-ray diffractometry. In an example method, a sample prepared by collecting a part of the sheet material from the laminated material and freeze-drying the part is analyzed with an X-ray diffractometer (for example, "SmartLab" available from Rigaku Corporation). Specifically, the analysis can be performed by X-ray diffractometry using a non-reflective silicon plate. Cellulose I crystals having a parallel-chain structure are known to exhibit high-intensity diffractions at 2θ of around 22.5°, around 16.7° and around 14.8° by peak separation. Accordingly, in an X-ray diffraction chart obtained by analysis of a sample collected from the molded wood product, the presence or absence of a cellulose I crystal structure can be determined by confirming the presence or absence of high-intensity diffraction peaks at 2θ of around 22.5°, around 16.7°, and around 14.8°.

According to the present disclosure, a sheet material of 100% plant material can be produced; however, a sheet material may contain a di- or higher valent fatty acid and/or an anhydride thereof as a component other than the plant-derived component and the plant material. In a case where a glossy appearance is desired for the laminated material while surface modification is performed, and/or in a case where integration of the base material and the sheet material is desired to be performed under milder conditions, the sheet material preferably contains a di- or higher valent fatty acid and/or an anhydride thereof. It is conceived that the reason why the excellent effects described above can be achieved by the sheet material containing the di- or higher valent fatty acid and/or an anhydride thereof is that the interaction occurred in the plant-derived component and the plant material and the di- or higher valent fatty acid and/or the anhydride thereof in the sheet material.

More specifically, in the sheet material in the present disclosure, some or all of hydroxy groups of the cellulose, the hemicellulose, and the lignin contained as the plant-derived component are formylated in a manner that an absorption peak exists in 1715 to 1725 cm⁻¹, and cellular structures as wood are broken up. The sheet material or the laminated material of the present disclosure containing such a plant-derived component and a plant material and containing a di- or higher valent fatty acid and/or an anhydride thereof is essentially different from a molded article produced by simply blending the di- or higher valent fatty acid and/or an anhydride thereof into wood flour, wood, wood pieces, or the like and then heat-treating the mixture.

Note that, in a case where the di- or higher valent fatty acid and/or an anhydride thereof is contained in the sheet material, ductility as the sheet material and adhesive strength (adhesiveness) are also improved.

In the present description, the di- or higher valent fatty acid is also referred to as polycarboxylic acid. Furthermore, in the present description, "and/or" is used to include both "and" and "or". For example, the di- or higher valent fatty acid and/or an anhydride thereof encompasses (i) a di- or higher valent fatty acid, (ii) an anhydride of a di- or higher valent fatty acid, and (iii) a di- or higher valent fatty acid and an anhydride of the di- or higher valent fatty acid and has the same meaning as at least one type selected from the group consisting of di- or higher valent fatty acids and anhydrides of di- or higher valent fatty acids.

Examples of the di- or higher valent fatty acid include succinic acid, adipic acid, malic acid, tartaric acid, malonic acid, fumaric acid, maleic acid, oxalic acid, phthalic acid, isophthalic acid, terephthalic acid, 2,6-pyridinedicarboxylic acid, acetonedicarboxylic acid, 3-oxoglutaric acid, 2,3-naphthalenedicarboxylic acid, azelaic acid, hexadecanedioic acid, docosanedioic acid, α,ω-alkane dicarboxylic acids, citric acid, and 1,2,3,4-butanetetracarboxylic acid. Furthermore, examples of the di- or higher valent fatty acid also include polycarboxylic acids of polysaccharides. Examples of polycarboxylic acids of polysaccharides include a polyuronic acid such as alginic acid and pectin; a polyuronic acid produced by acid-treating a primary hydroxy group of cellulose, and carboxymethyl cellulose. A single type of the di- or higher valent fatty acid and/or an anhydride thereof may be contained alone or a combination of two or more types may be contained in combination. As the di- or higher valent fatty acid and/or an anhydride thereof, citric acid and/or an anhydride thereof is preferred.

In a case where the sheet material contains the di- or higher valent fatty acid and/or an anhydride thereof, the content thereof is preferably from 3 to 200 parts by weight, more preferably from 15 to 150 parts by weight, even more preferably from 20 to 100 parts by weight, and particularly preferably from 25 to 75 parts by weight, per 100 parts by weight total of the plant-derived component and the plant material constituting the sheet material. In a case where the di- or higher valent fatty acid and/or an anhydride thereof is contained, the constituent other than this component is preferably substantially composed of a plant-derived component and a plant material.

The sheet material may contain hydroxy acids and/or ammonium dihydrogenphosphate as the component other than the plant-derived component and the plant material. Note that the hydroxy acids encompasses both carboxylic acid and alcohol. Specific examples of the hydroxy acids include glycolic acid, lactic acid, glyceric acid, hydroxybutyric acid, citramalic acid, isocitric acid, leucine acid, mevalonic acid, pantoic acid, ricinoleic acid, ricinelaidic acid, cerebronic acid, quinic acid, and shikimic acid.

It is conceived that the components that may be contained in the sheet material, i.e., at least one type selected from the group consisting of the di- or higher valent fatty acid, the anhydride of the di- or higher valent fatty acid, the hydroxy acids, and the ammonium dihydrogenphosphate, has a function as a crosslinking agent. Note that the crosslinking agent means a substance that crosslinks a molecule of the lignocellulose and a molecule. In a case where the sheet material of the present disclosure contains at least one type selected from the group consisting of the di- or higher valent fatty acid, the anhydride of the di- or higher valent fatty acid, the hydroxy acids, and the ammonium dihydrogenphosphate, a crosslinked structure by covalent bonding may be formed in the sheet material of the present disclosure.

In a case where the sheet material of the present disclosure contains the di- or higher valent fatty acid and/or an anhydride thereof, a polyhydric alcohol and/or saccharides may be used together with the di- or higher valent fatty acid and/or an anhydride thereof. Examples of the polyhydric alcohol and the saccharides include glycerin, ethylene glycol, sucrose, starch, chitin, chitosan, cellulose, dextran, pullulan, β-1,3-glucan, β-1,6-glucan, glucose, cellooligosaccharides, mannose, mannooligosaccharides, xylose, xylooligosaccharides, amino acids, peptides, and proteins.

Furthermore, as described above, according to the present disclosure, a laminated material of 100% plant material can be produced; however, a sheet material or a laminated material may contain a component other than the plant-derived component and the plant material (e.g., additives such as an electroconductive agent, a magnetic powder, an antimicrobial agent, a flame retardant, an antioxidant, and a UV absorber) as long as the effects of the present disclosure are not impaired. In a case where the sheet material contains an additive, the content thereof is preferably from 1 to 500 parts by weight, more preferably from 3 to 100 parts by weight, and even more preferably from 5 to 75 parts by weight, per 100 parts by weight in total of the plant-derived component and the plant material constituting the sheet material. In a case where the sheet material contains an additive, the constituent other than this additive is preferably substantially composed of a plant-derived component and a plant material.

The sheet material of the present disclosure can be used in the laminated material described above. The density of this sheet material is not particularly limited and can be adjusted by the type of the raw material, dissolving conditions, and the like. For example, the density of the sheet material may be 0.2 g/cm³ or greater, may be 0.3 g/cm³ or greater, may be 0.5 g/cm³ or greater, and may be 0.8 g/cm³ or greater, and may be 1.2 g/cm³ or less, may be 1.1 g/cm³ or less, and may be 1.0 g/cm³ or less. The density of the sheet material is an apparent density as measured in accordance with JIS Z 8807 "Methods of measuring density and specific gravity of solid".

The tensile characteristics of the sheet material are appropriately set based on the use of the laminated material and the like, and from the viewpoint of ease in molding, the Young's modulus of this sheet material may be 0.05 GPa or greater, and may be 1.0 GPa or greater. From the viewpoint of durability, the Young's modulus is preferably 4.0 GPa or less. From the viewpoint of durability, the maximum stress of the sheet material may be 0.5 MPa or greater, may be 5.0 MPa or greater, and may be 10 MPa or greater. From the viewpoint of ease in molding, the maximum stress is preferably 80 MPa or less. From the viewpoint of ease in molding, the maximum elongation of the sheet material may be 0.5% or greater, and may be 1.5% or greater. From the viewpoint of durability, the maximum elongation is preferably 5.0% or less. Note that the Young's modulus, maximum stress, and maximum elongation of the sheet material are measured by a tensile test in accordance with the provisions of ISO527-1. Details of a measurement method and measurement conditions will be described in the Examples below.

The thickness of the sheet material is appropriately set based on the use of the laminated material and is not particularly limited. The thickness of the sheet material may be smaller as long as effects such as improvement in appearance of the base material, surface hydrophobization, and increase in pencil hardness are exhibited. For example, the average thickness of the sheet material may be 2 mm or less, may be 500 µm or less, and may be 50 µm or less. By using a thinner sheet material, a laminated material in which physical properties of the base material itself (e.g., hardness and grain) are reflected can be produced while the used amount of plant resources which are raw materials of the sheet material is reduced. Meanwhile, in a case where a wooden board or the like is used as the base material, surface modification such as decoration can be performed by using a thick sheet material. The average thickness of the sheet material in the present disclosure is an average value determined by performing multiple measurements by using a known means.

From the viewpoint of achieving high heat resistance, the glass transition temperature Tg of the sheet material may be 180°C or higher, may be 190°C or higher, and may be 200°C or higher. The upper limit value is not particularly limited, and the glass transition temperature Tg is preferably 280°C or lower. The glass transition temperature of the sheet material is measured by dynamic viscoelasticity measurement. Details of a measurement method and measurement conditions will be described in the Examples below.

The sheet material of the present disclosure preferably has less color tone pattern and is preferably uniform. For example, in a laminated material in which such a sheet material is laminated with wood that is the base material, the grain of the wood that is the base material is showing through the sheet material, and the same appearance as the base material can be maintained. Furthermore, in a case where glued laminated wood is used as the base material, good appearance can be achieved because the bonding part of the glued laminated wood is covered and hidden by the sheet material. Meanwhile, a sheet produced by simply thinly slicing wood may have grain remained and, when this is bonded to wood that is the base material by an adhesive agent or the like, appearance may be deteriorated due to mixing of the grain of the sheet and the grain of the base material.

### Method for Producing Laminated Material

The method for producing the laminated material of the present disclosure includes: (1) producing a lignocellulose solution by dissolving a plant raw material in an organic acid (dissolving process); (2) producing a sheet material substantially made of a plant-derived component by removing a liquid component from the produced lignocellulose solution (sheet forming process); and (3) producing a laminated material including the sheet material integrated with the first base material by laminating the sheet material on a surface of the first base material and thermocompression-bonding the sheet material and the first base material (laminating process 1).

The laminated material of the present disclosure may be produced by a production method including: (1) producing a lignocellulose solution by dissolving a plant raw material in an organic acid (dissolving process); (2) producing a sheet material substantially made of a plant-derived component by removing a liquid component from the produced lignocellulose solution (sheet forming process); and (3) laminating and bonding the first base material and the second base material by placing the sheet material in between the first base material and the second base material and thermocompression-bonding the sheet material, the first base material, and the second base material (laminating process 2).

In this production method, the laminated material is produced by placing and laminating and bonding a sheet material, which is produced by removing a liquid component containing an organic acid from a lignocellulose solution produced by dissolving a plant raw material in this organic acid, in a manner that a surface of this sheet material is in contact with a surface of the base material described above. Because the organic acid used to dissolve the plant raw material is removed as the liquid component, a sheet material substantially made only of the plant-derived component can be produced. Thus, the sheet material of the present disclosure is 100% plant material, in which chemical agents such as an organic solvent that becomes a cause of sick building syndrome do not remain. Furthermore, this sheet material and the base material are integrated by thermocompression-bonding without using an adhesive agent and the like. For example, in a case where wood is chosen as the material of the base material, according to this production method, a laminated material that contains no remained chemical agent derived from an adhesive agent and that is 100% plant material can be produced. In this production method, use of chemical agents in each process is small and, in particular, use of a highly volatile organic solvent is unnecessary. This production method is excellent in safety during operation.

Furthermore, in the production method of the present disclosure, even when the material of the base material is the so-called low-grade wood or wood having an appearance deteriorated over time or the like, excellent appearance can be imparted by laminating and integrating with the sheet material of the present disclosure. Furthermore, because wood flour, chips, and the like can be used as the plant raw material of the sheet material, for example, a laminated material having an appearance with a sense of luxury can be produced by effective use of wood flour and the like generated during sawing of high-grade wood. Furthermore, biomass resources such as building waste, timber from forest thinning, unused farm products, and agricultural waste can be effectively used as the sheet material plant raw material.

Hereinafter, steps of the production method will be described in detail.

### (1) Dissolving Process

In this process, first, a lignocellulose solution is produced by dissolving a plant raw material in an organic acid. The plant raw material is not particularly limited and may be woody biomass, may be herbaceous biomass, and maybe a mixture of these.

The woody biomass may be softwood (e.g., Japanese cedar, Japanese cypress, Japanese red pine) and may be hardwood (e.g., eucalyptus, Japanese beech). Two or more types may be used in combination. From the viewpoint of effective use of decreasing forest resources, woody biomass that has been typically disposed can be suitably used. For example, wood flour generated during sawing, small pieces (chips) that cannot be used as lumber remnants, and the like can be used as the plant raw material. From the viewpoint of imparting appearance with a sense of luxury to the laminated material, the so-called high-grade wood such as Japanese cedar or Japanese cypress is preferred. According to the method of the present disclosure, wood flour, chips, and the like generated during sawing of high-grade wood can be effectively used as the plant raw material.

The woody biomass may be natural wood and may be lumber cut from natural wood. The shape of the woody biomass is not particularly limited and, for example, can be used by appropriately selecting from a board form, a chip form, a powder form, and the like.

Examples of the herbaceous biomass include sugar cane bagasse, rice straw, wheat, wheat bran, tomato, onion, and *Phyllostachys edulis.* Two or more types may be used in combination.

The woody biomass or the herbaceous biomass may be used after being pulverized as necessary. From the viewpoint of improvement in dissolution efficiency, the size of the plant raw material in terms of the maximum size in a planar view may be 50 mm or less, may be 40 mm or less, or may be 30 mm or less. From the viewpoint of dust prevention, the size of the plant raw material is preferably 0.1 mm or greater in terms of the maximum size in a planar view. As necessary, the plant raw material may be pulverized before mixing with an organic acid to adjust its size to the size described above.

The type of the organic acid is not particularly limited. The organic acid is typically a carboxylic acid. The carboxylic acid may be an aliphatic carboxylic acid or an aromatic carboxylic acid. From the viewpoint of excellent solubility of the plant raw material, an α-keto acid and a carboxylic acid having a formyl group are preferable, and an organic acid selected from the group consisting of formic acid, glyoxylic acid, and pyruvic acid is particularly preferable. Formic acid, which can be produced using wood gas (a mixed gas of carbon dioxide and hydrogen) as a raw material, is particularly preferred.

Note that "dissolving" means a state where the shape of the plant raw material charged in the organic acid cannot be visually recognized. Even in a case where fibrous substances derived from lignocellulose are observed in the plant raw material by microscopic observation or the like, the case where the shape of the plant raw material itself has disappeared is defined as "dissolved". In the present disclosure, the liquid in such a "dissolved" state is defined as "solution", and a solution containing a plant-derived component is referred to as "lignocellulose solution". It is preferable that the plant raw material is homogeneously dissolved in the organic acid. However, the plant raw material may be partially dissolved in the organic acid. In the case of partial dissolution, the lignocellulose solution may be produced by removing insoluble matter by filtration or the like.

The amount of the organic acid mixed with the plant raw material is appropriately selected based on the type and shape of the plant raw material, the type of the organic acid, and the like. From the viewpoint of improving dissolution efficiency, the amount of the organic acid may be 4 parts by weight or greater, and may be 9 parts by weight or greater, with respect to 1 part by weight of the plant raw material. From the viewpoint of improving production efficiency, the amount of the organic acid may be 200 parts by weight or less, may be 100 parts by weight or less, and may be 50 parts by weight or less, with respect to 1 part by weight of the plant raw material. As long as the effects of the present disclosure are achieved, the organic acid may be added as is to the cellulose-containing raw material, or may be added in the form of a solution having a desired concentration to the cellulose-containing raw material.

As long as the lignocellulose solution is produced, the dissolution conditions are not particularly limited, and are appropriately selected based on the type and shape of the plant raw material, the type of the organic acid, and the like. For example, from the viewpoint of high dissolution efficiency, the dissolution temperature may be 20°C or higher, may be 30°C or higher, and may be 40°C or higher. From the viewpoint of energy reduction, the dissolution temperature may be 100°C or lower, may be 90°C or lower, and may be 80°C or lower. The dissolution time can be appropriately set based on the dissolution temperature.

From the viewpoint of promoting the dissolution, after the plant raw material is charged in the organic acid, a stirring treatment may be performed, or a stirring treatment accompanied by pulverization may be performed. The stirring treatment accompanied by pulverization in the organic acid makes it possible to dissolve the plant raw material under milder conditions. Examples of the apparatus for the stirring treatment accompanied by pulverization include a bead mill, a colloid mill, a disc refiner, and a conical refiner.

From the viewpoint of promoting dissolution, pressurization treatment or depressurization treatment may be performed by using a pressure adjustment means before and/or after mixing the plant raw material and the organic acid. It is conceived that pressure fluctuation applied to the plant raw material by the pressure adjustment means relaxes the firm higher-order structure of cellulose, especially lignocellulose, in the plant raw material and improves the solubility in the organic acid. The pressurization treatment or depressurization treatment enables dissolution at a relatively low temperature, and reduces energy required for heating and/or temperature keeping during the dissolution. From the viewpoint that the organic acid is efficiently introduced into the structure of the plant raw material by the pressure variation, it is preferable to increase or reduce pressure after addition of the organic acid to the plant raw material.

In a case where the pressure is reduced, the pressure is preferably reduced in a range of 1.0 kPa or higher and 10.0 kPa (absolute pressure). In a case where the pressure is increased, the pressure is preferably increased in a range of 200 kPa or higher and 1000 kPa or lower (gauge pressure). Note that in the present specification, the absolute pressure is used in a case where the pressure is lower than the atmospheric pressure by a depressurization treatment, and the gauge pressure based on the atmospheric pressure is used in a case where the pressure is higher than the atmospheric pressure by a pressurization treatment.

The pressure adjusting means used in the pressurization treatment or the depressurization treatment is not particularly limited. The pressure may be adjusted to the above-described range by a known means such as an aspirator, an ejector, a compressor, or a mechanical pump.

The solid content concentration of the lignocellulose solution produced by dissolving the plant raw material in the organic acid is not particularly limited; however, from the viewpoint of ease in removal of the liquid component, the solid content concentration of the lignocellulose solution may be 0.5 (w/v)% or greater, may be 1.0 (w/v)% or greater, may be 1.5 (w/v)% or greater, and may be 2.0 (w/v)% or greater. From the viewpoint of ease in production, the solid content concentration of the lignocellulose solution may be 20 (w/v)% or less, may be 15 (w/v)% or less, and may be 10 (w/v)% or less. The lignocellulose solution may further contain a known additive such as a dye, as long as the effects of the present disclosure are not inhibited.

### (2) Sheet Forming Process

In this process, a solid content is recovered by removing a liquid component from the lignocellulose solution. By forming this solid content into a sheet form, the sheet material of the present disclosure substantially made of the plant-derived component can be produced.

The method of producing the sheet material by removing the liquid component from the lignocellulose solution is not particularly limited. For example, the sheet material of the present disclosure may be produced by casting the lignocellulose solution in a container having desired size and shape and drying to remove the liquid component, or the sheet material of the present disclosure may be produced by forming the solid content after drying into a sheet form. Furthermore, from the viewpoint of improving drying efficiency, before the drying, the lignocellulose solution may be concentrated by using a known concentration method such as evaporative concentration or vacuum concentration. As long as the effects of the present disclosure are achieved, water or an alkali as a precipitation agent may be added to the lignocellulose solution. The sheet material of the present disclosure may be produced by forming the solid content precipitated by the addition of water or the alkali into a sheet form and drying the sheet. In the method using a precipitation agent, a casting method is preferably employed due to the possibility of losing some of the components contained in the plant raw material.

The organic acid added during dissolving has been removed as the liquid component from the sheet material produced as described above. This sheet material is produced by reprocessing of the dissolved plant raw material as a solid content and is substantially made only of the plant-derived component.

The plant-derived component mainly contains cellulose. The plant-derived component may contain lignin and hemicellulose together with the cellulose. The plant-derived component preferably contains at least one or two or more selected from the group consisting of cellulose, hemicellulose, and lignin. Some or all of hydroxy groups contained in the cellulose, the hemicellulose, and the lignin may be formylated. The plant-derived component may further contain polyphenols such as tannin, catechin, and flavonoids, and terpenes.

Furthermore, the sheet material or the solid content produced by removing the liquid component from the lignocellulose solution may be washed to further remove an organic acid-derived component, an alkali-derived component, and the like. Distilled water can be used for washing.

The thickness of the produced sheet material is not particularly limited as long as the effects of the present disclosure can be achieved and, for example, can be adjusted by the solid content concentration of the lignocellulose solution. From the viewpoint of covering up the appearance of the base material surface, the average thickness of the sheet material may be 10 µm or greater, may be 100 µm or greater, and may be 200 µm or greater. From the viewpoint of ease in integration with the base material, the average thickness of the sheet material may be 2000 µm or less, may be 1000 µm or less, may be 800 µm or less, and may be 600 µm or less. Note that the "average thickness" described herein is an average thickness of the sheet material before the sheet material is thermocompression-bonded to the base material and is an average value of measured values determined by performing measurement for multiple times using a known means.

### (3) Laminating Process

This process is a process of producing a laminated material from the sheet material and the base material described above. In detail, thermocompression-bonding is performed in the state where the base material is laminated with the sheet material. More specifically, this process may be a process of producing a laminated material in which the sheet material and the first base material are integrated by laminating and thermocompression-bonding in a manner that a surface of the first base material and a surface of the sheet material are in contact, or may be a process of laminating and bonding the first base material and the second base material by placing the sheet material in between the first base material and the second base material and thermocompression-bonding in a condition where both of surfaces of the sheet material are in contact with a surface of the first base material and a surface of the second base material. Furthermore, this process may be a process of laminating and bonding the first base material and the second base material by interposing a sheet material therebetween where the sheet material and the first base material are integrated by laminating the sheet material onto a surface of the first base material and thermocompression-bonding the sheet material and the first base material, and then the second base material is laminated and thermocompression-bonded onto a surface of the sheet material integrated with the first base material. According to the sheet material of the present disclosure, a laminated material, in which the base material and the sheet material are integrated without use of any adhesive agent and the like, can be produced.

The material of the base material is selected from the group consisting of wood, a plastic, a metal, a ceramic, a molded pulp, and a paper. The type of the base material described above can be appropriately selected and used. The material of the first base material and the material of the second base material may be the same or different.

According to the present disclosure, even low-quality wood having a problem in appearance in the related art can be suitably used as the base material. The shape and size of the base material are also not particularly limited; however, from the viewpoint of adhesiveness to the sheet material, a shape having a substantially flat surface can be suitably used. From the viewpoint of obtaining a laminated material of a plant material, the base material is preferably wood, molded pulp, or paper, more preferably wood, and even more preferably wood produced by sawing natural wood; however, as long as no organic solvent, no adhesive agent, and the like remain, a wooden board, a glued laminated wood, a plywood, and the like can be also used. A wooden board, a glued laminated wood, a plywood, and the like that are produced by using the adhesive agent of the present disclosure described below are more preferred.

For the thermocompression-bonding of the sheet material and the base material, a known hot press machine and the like can be used. The conditions of the thermocompression-bonding can be appropriately set based on the types and sizes of the sheet material and the base material. From the viewpoint of ease in laminating and integrating the sheet material and the base material, the temperature of the thermocompression-bonding may be 60°C or higher, may be 80°C or higher, may be 100°C or higher, and may be 150°C or higher. From the viewpoint of avoiding discoloration and deformation of the sheet material and the base material, the temperature of the thermocompression-bonding may be 220°C or lower, may be 200°C or lower, and may be 190°C or lower.

In a case where the sheet material contains the di- or higher valent fatty acid and/or an anhydride thereof, the temperature of the thermocompression-bonding may be 20°C or higher, preferably 30°C or higher, and more preferably 70°C or higher. In a case where the sheet material contains the di- or higher valent fatty acid and/or an anhydride thereof, the temperature of the thermocompression-bonding may be 220°C or lower, preferably 130°C or lower, and more preferably 110°C or lower. Thus, the sheet material containing the di- or higher valent fatty acid and/or an anhydride thereof can be integrated with the base material under milder conditions compared to a sheet material that does not contain the di- or higher valent fatty acid and/or an anhydride thereof.

From the viewpoint of ease in laminating and integrating the sheet material and the base material, the pressure of the thermocompression-bonding may be 1 MPa or greater, and may be 3 MPa or greater. From the viewpoint of avoiding deformation of the sheet material and the base material, the pressure of the thermocompression-bonding may be 15 MPa or less, and preferably 10 MPa or less. The time of the thermocompression-bonding is appropriately selected based on the temperature and the pressure. Note that the pressure at the time of thermocompression-bonding means a pressure applied to the sheet material on the base material. The pressure (in Pa) at the time of the thermocompression-bonding can be determined by dividing a load (in N) applied to a hot press machine by an area (in m²) of contact between the base material and the sheet material.

From the viewpoint of improvement in adhesiveness between the sheet material and the base material, the base material surface may be subjected to polishing treatment before lamination with the sheet material, by using a known polishing means. In other words, this production method may include polishing a surface of the base material before the sheet material is laminated. For example, this production method may further include polishing the first base material before the sheet material is laminated, and may further include polishing the first base material and the second base material before the sheet material is placed. As the polishing means, for example, abrasive paper of various grades can be used.

In a case where the sheet material containing the di- or higher valent fatty acid and/or an anhydride thereof is produced, any of the following methods may be applied based on timing of blending the di- or higher valent fatty acid and/or an anhydride thereof:
[i] a method of mixing the di- or higher valent fatty acid and/or an anhydride thereof together with a plant raw material and an organic acid in the dissolving process (1) by which a lignocellulose solution is produced by dissolving the plant raw material in the organic acid;
[ii] a method of mixing the di- or higher valent fatty acid and/or an anhydride thereof after dissolving process (1) by which the lignocellulose solution is produced by dissolving the plant raw material in the organic acid and before the sheet forming process (2) described above; or
[iii] a method of mixing the di- or higher valent fatty acid and/or an anhydride thereof after the sheet material that does not contain the di- or higher valent fatty acid and/or an anhydride thereof is produced by the sheet forming process (2) described above. Note that, in the case of [iii] described above, the method of applying or allowing infiltration of the di- or higher valent fatty acid and/or an anhydride thereof into the sheet material that does not contain the di- or higher valent fatty acid and/or an anhydride thereof may be also employed.

In a case where sheet material contains various additives such as hydroxy acids, ammonium dihydrogenphosphate, polyhydric alcohols, saccharides, and the additives described above, the timing of addition is the same as the timing in a case where the di- or higher valent fatty acid and/or anhydride thereof is contained in the sheet material.

### Method for Modifying Surface of Molded Article

The technology of the present disclosure can be applied to surface modification of a molded article made of various materials. This method for modifying a surface includes:
(1) producing a lignocellulose solution by dissolving a plant raw material in an organic acid (dissolving process);
(2) producing a sheet material substantially made of a plant-derived component by removing a liquid component from the produced lignocellulose solution (sheet forming process); and
(3) laminating the sheet material on a surface of a molded article, and thermocompression-bonding the sheet material and the molded article (surface modification process). According to this surface modification method, the effects of imparting a desired appearance to the molded article and improving durability by hydrophobization of the surface or increase in the hardness can be achieved. Furthermore, application is also possible for a method of improving an appearance of a molded wood product by repairing the molded wood product having a deteriorated appearance due to change over time. From the viewpoint of durability after surface modification, the sheet material is preferably integrated with the molded article by thermocompression-bonding.

The material of the molded article is not particularly limited as long as the thermocompression-bonding to the sheet material of the present disclosure can be performed, the materials described above for the base material are suitably used. A molded article made of a material selected from the group consisting of wood, a plastic, a metal, a ceramic, a molded pulp, and a paper is preferred. The molded article may be made of a single component, or may be made of a combination of a plurality of components. The materials of these constituting members may be the same or different. The material of the constituting member forming a surface of the molded article is preferably selected from the group consisting of wood, a plastic, a metal, a ceramic, a molded pulp, and a paper.

Note that "molded wood product" means a molded article mainly containing wood as a raw material. The constituting member of the molded wood product may be a lumber cut from natural wood or solid natural wood and may be a plywood or a glued laminated wood made of a plurality of lumber. In a case where the appearance of a molded wood product including such a constituting member in a surface part is deteriorated by damaging, deterioration over time, or the like, good appearance of the molded wood product can be recovered by repairing the molded wood product by laminating the sheet material described above onto the surface, and thermocompression-bonding the sheet material and the surface.

Regarding this surface modification method, details of the dissolving process and the sheet forming process are the same as those described above. In the surface modification process, the base material in the laminating process described above can be read and used as the molded article. In the present disclosure, use of an adhesive agent and the like in the surface modification process is not required. In a case where this surface modification method is applied for doors, furniture, and the like, occurrence of sick building syndrome due to remaining of chemical agents such as adhesive agents can be avoided.

### Adhesive Agent

As described above, the base materials made of various materials are bonded by interposing the sheet material of the present disclosure therebetween. In other words, the sheet material of the present disclosure can be applied as an adhesive agent to bond components that are made of various materials. Furthermore, the lignocellulose solution described above can be applied for adhesion of various components. That is, the adhesive agent of the present disclosure contains: a lignocellulose solution produced by dissolving a plant raw material in an organic acid, and/or a sheet material substantially made of a plant-derived component, the sheet material produced by removing a liquid component from the lignocellulose solution. From other viewpoints, the present disclosure provides a bonding method including: adding a lignocellulose solution produced by dissolving a plant raw material in an organic acid, and/or a sheet material substantially made of a plant-derived component, the sheet material produced by removing a liquid component from the lignocellulose solution, to objects to be bonded; and heating them. The lignocellulose solution and the sheet material each contain a plant-derived component in which some or all of hydroxy groups are formylated. It is conceived that this plant-derived formylated component acts as an adhesive agent.

The adhesive agent of the present disclosure is preferably an adhesive agent containing a lignocellulose solution produced by dissolving a plant raw material in an organic acid; the lignocellulose solution described above containing a plant-derived component; this plant-derived component is one or two or more selected from the group consisting of cellulose, hemicellulose, and lignin; and some or all of hydroxy groups contained in the cellulose, the hemicellulose, and the lignin described above are formylated.

The plant raw material and the organic acid described above for the lignocellulose solution and the sheet material are suitably used. The preferred plant raw material is a woody biomass, a herbaceous biomass, or a mixture of these. The preferred organic acid is one or two or more selected from the group consisting of formic acid, glyoxylic acid, and pyruvic acid.

As the bonding method using this adhesive agent, a thermal adhesion is preferable. The bonding method may be a wet method or a dry method. For example, as the adhesive agent to produce a wooden board, a lignocellulose solution produced by dissolving a plant raw material in an organic acid can be used. The wooden board may be a fiberboard produced by making wood into a fibrous form and then molding or may be a particle board produced by crushing wood into a chip form and then molding. Examples of the fiberboard include a hardboard, an insulation board, and a medium-density fiberboard (MDF). After the lignocellulose solution described above is added to small pieces or fibers of various wood and mixed, by pressing at a high humidity and high pressure, a particle board and a fiberboard can be produced. These are wooden boards that contain no chemical agent such as an organic solvent and that is 100% plant material.

The preferred requirements of the adhesive agent are the same as preferred requirements related to the sheet material of the present disclosure described above. Thus, in this section, description of preferred requirements of the adhesive agent will be omitted.

In a case where the sheet material of the present disclosure is applied as an adhesive agent to bond components made of various materials, because the integration of the base material and the sheet material can be performed under milder conditions, the adhesive agent is preferably a sheet material containing the di- or higher valent fatty acid and/or an anhydride thereof. Note that, in a case where the di- or higher valent fatty acid and/or an anhydride thereof is contained in the sheet material, ductility as the sheet material and adhesive strength (adhesiveness) are also improved. For the sheet material containing the di- or higher valent fatty acid and/or an anhydride thereof, the range of the preferred content and the timing of addition of the di- or higher valent fatty acid and/or an anhydride thereof as well as the preferred temperature range for thermocompression-bonding in a case where the sheet material is used as an adhesive agent to bond components are as described above. Thus, descriptions of these ranges will be omitted here.

Hereinafter, further description is given in more detail using an example of a fiberboard.

In a wet method, a pulp solution is prepared by subjecting wood to fibrillation in presence of an organic acid (e.g., formic acid). This pulp solution contains a lignocellulose solution produced by dissolving a plant raw material in an organic acid as an adhesive agent. In this pulp solution, to impart water resistance and strength, after a sizing agent is added as necessary, the fiber is flow-casted on a wire netting in a state where the fiber is dispersed in a liquid and molded into a mat form while being dehydrated. The produced wet mat is hot pressed and dehydrated by prepress and dried and solidified by thermocompression, and thus a fiberboard is produced.

In a dry method, typically, a large amount of an adhesive agent is required to be added to bond fibers in a dried state. However, according to the technology of the present disclosure, by adding an organic acid (e.g., formic acid) in the production process, a lignocellulose solution produced by dissolving a plant raw material in an organic acid can coexist as an adhesive component. According to the present disclosure, unlike the wet method, because a large amount of water is not used, dehydration is not required to be performed on the wire netting, and a fiberboard having smooth surfaces on both faces can be produced. In this method, at the time of hot pressing, only a plant-derived formylated component is required to be present together with the fibers. Thus, an organic acid is only required to be added at least before the hot pressing and, for example, the organic acid may be added during fibrillation of wood and may be added immediately before transportation to a dryer.

Hereinafter, a case of application to a particle board will be described. Particle boards are classified into a monolayer particle board, a three-layer particle board, and a multi-layer particle board based on the structure thereof. The three-layer particle board is a particle board including both surface layers (back and front surface layers) having fine small pieces, and an inner layer (core layer) having relatively coarse pieces. The multi-layer particle board has a structure successively including fine small pieces to coarse pieces from surfaces to a center layer. The adhesive agent of the present disclosure can be applied to all of these structures.

Specifically, in the production process of a particle board, after wood is cut, crushed, and dried, the resultant small wood pieces are sprayed with an adhesive agent by using a glue blender, agitated, and homogenized (glueing). By using the adhesive agent of the present disclosure in place of a known adhesive agent, a particle board that does not generate formaldehyde and the like and that is 100% plant material can be produced.

For example, in a case where a three-layer board is produced, a three-layered structured mat is formed by glueing surface layers and a core layer using small wood pieces having different sizes, and then laminating a surface layer, a core layer, and a surface layer in this order. This three-layered structured mat is compressed at a high temperature and a high pressure, the plant-derived formylated component bonds and integrates small wood pieces, and thus a three-layer board is produced.

Furthermore, an oriented strand board (OSB) is to increase the strength for building construction (for foundation), and surface characteristics are not taken into consideration. By producing an OSB using the adhesive agent of the present disclosure and laminating and bonding the sheet material of the present disclosure onto this surface, a laminated material having a decorated surface and having a high strength can be produced.

From the viewpoints described above, the technology of the present disclosure is a method for bonding wood pieces including adding an organic acid to fine wood and heating, and also is a method for producing a wooden board. From other viewpoints, the present disclosure is a method for bonding biomass pieces including adding an organic acid to fine biomass materials and heating, and also is a method for producing a biomass product.

### Examples

The effects of the present disclosure will be clarified by the examples below, but the present disclosure should not be construed as being limited based on the description of the examples.

### Production of Sheet Material

### Production Example 1

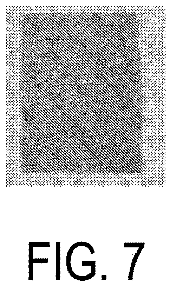

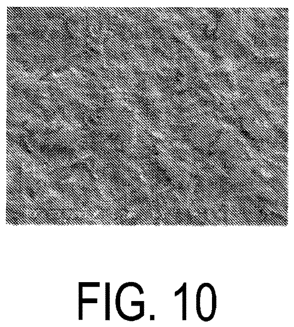

A vial with a volume of 50 mL was charged with 200 mg of eucalyptus chips, which were a plant raw material. In this vial, 20 mL of formic acid (available from Nacalai Tesque, Inc.) with a concentration of 80 wt.% was added and subjected to a depressurization treatment. Then, the pressure was returned to atmospheric pressure, the temperature was increased to 50°C, and agitation was started. After the agitation was continued for 7 days at normal pressure, it was visually confirmed that eucalyptus wood flour disappeared, and thus a homogeneous lignocellulose solution (also referred to as a woody solution) was produced. The entire amount of this woody solution was flow-casted onto cellophane and then allowed to stand on a culture dish having a lid at room temperature overnight to remove the liquid component, and thus a sheet material having an average film thickness of 16 µm was produced. An appearance of this sheet material is shown in FIG. 7. A surface state of the sheet material observed by using a scanning electron microscope is shown in FIG. 10 (magnification: 500 times). This sheet material was subjected to Fourier transform infrared spectroscopy (FTIR spectroscopy). This result confirmed that the infrared absorption spectrum had an infrared absorption peak in a region of 1715 to 1725 cm⁻¹, which was attributed to a formyl group.

### Production Examples 2 to 6

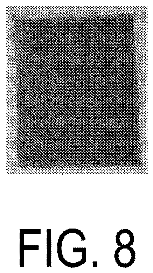

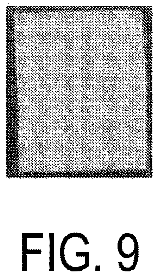

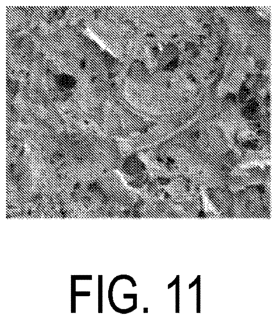

The sheet materials of Production Examples 2 to 6 were produced in the same manner as in Production Example 1 except that the types of the plant raw materials and the dissolution conditions were changed to those listed in Table 1 below. These sheet materials were subjected to Fourier transform infrared spectroscopy (FTIR spectroscopy). These results confirmed that all of Production Examples 2 to 6 each have an infrared absorption spectra with an infrared absorption peak in a region of 1715 to 1725 cm⁻¹, which was attributed to a formyl group. Appearances of the sheet materials of Production Examples 2 and 5 are respectively shown in FIGS. 8 and 9. FIG. 11 is a surface state of the sheet material of Production Example 4 observed by using a scanning electron microscope (magnification: 500 times).

### Production Example 7

The sheet material of Production Example 7 having an average film thickness of 30 µm was produced by employing the same type of the plant raw material and the dissolution conditions as in Production Example 5 but changing the liquid thickness at the time of flow-casting the lignocellulose solution onto cellophane.

### Production Example 8

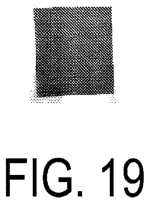

First, a homogeneous lignocellulose solution (also referred to as a woody solution) was produced in the same manner as in the method described for Production Example 1. Next, 150 mg of citric acid (Product number: 08899-75, available from Nacalai Tesque, Inc.) was added to this woody solution, and thus a citric acid-containing woody solution was produced. Then, the entire amount of the citric acid-containing woody solution was flow-casted onto cellophane and then allowed to stand on a culture dish having a lid at room temperature overnight to remove the liquid component, and thus a sheet material having an average film thickness of 50 µm was produced. An appearance of this sheet material is shown in FIG. 19. This sheet material was subjected to Fourier transform infrared spectroscopy (FTIR spectroscopy). This result confirmed that the infrared absorption spectrum had an infrared absorption peak in a region of 1715 to 1725 cm⁻¹, which was attributed to a formyl group.

### Production Example 9

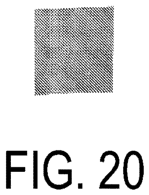

First, a homogeneous lignocellulose solution (also referred to as a woody solution) was produced in the same manner as in the method described for Production Example 4. Next, 150 mg of citric acid (Product number: 8899-75, available from Nacalai Tesque, Inc.) was added to this woody solution, and thus a citric acid-containing woody solution was produced. Then, the entire amount of the citric acid-containing woody solution was flow-casted onto cellophane and then allowed to stand on a culture dish having a lid at room temperature overnight to remove the liquid component, and thus a sheet material having an average film thickness of 50 µm was produced. An appearance of this sheet material is shown in FIG. 20. This sheet material was subjected to Fourier transform infrared spectroscopy (FTIR spectroscopy). This result confirmed that the infrared absorption spectrum had an infrared absorption peak in a region of 1715 to 1725 cm⁻¹, which was attributed to a formyl group.

### Production Example 10

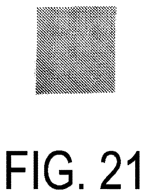

The sheet material having an average film thickness of 50 µm was produced by the same method as for Production Example 8 except for charging 200 mg of bamboo chips in place of the 200 mg of eucalyptus chips. An appearance of this sheet material is shown in FIG. 21. This sheet material was subjected to Fourier transform infrared spectroscopy (FTIR spectroscopy). This result confirmed that the infrared absorption spectrum had an infrared absorption peak in a region of 1715 to 1725 cm⁻¹, which was attributed to a formyl group.

### Physical Property Evaluation of Sheet Material

The physical properties of sheet materials of Production Examples 1 to 7 were evaluated by the following methods. The evaluation results are shown in Table 1 below.

### Density

The apparent density (g/cm³) of each of the sheet materials was measured in accordance with JIS Z 8807 "Methods of measuring density and specific gravity of solid". An average of five measurement values of each of the properties is shown in Table 1 below.

### Contact angle

The contact angle in the present disclosure is a dynamic contact angle determined by measuring a change in contact angle from that immediately after dropping of a liquid droplet. Measurement of the dynamic contact angle requires specifying a time. The contact angle was measured using a contact angle meter (available from Nick Corporation). The contact angle was measured three times in a contact angle measurement mode with a maximum measurement time of 1200 seconds (0 to 1 second and 1 to 1200 seconds), and the average of the measured values was determined. The maximum contact angle for 0 to 1 second after dropping of distilled water is shown in Table 1 below.

### Tensile property evaluation

Each of the sheet materials was punched into a dumbbell shape (dumbbell No. 7) to prepare a test piece for a tensile test. The tensile test was performed using a tensile tester (trade name "Universal Tensile Tester (Tensilon) RTG-B 10", available from A&D Company, Limited). The tensile test (tensile speed of 2 mm/min, distance between clamps of 20 mm, distance between marked lines of 12 mm) was carried out in accordance with ISO 527-1 standard to measure the Young's modulus (in MPa), maximum stress (in MPa), and maximum elongation (in %) (temperature of 23°C, humidity of 50%). An average of five measurement values of each of the properties is shown in Table 1 below.

### Glass Transition Temperature

The glass transition temperatures of the sheet materials were measured using a dynamic viscoelasticity measuring apparatus (trade name "RSA G2", available from TA instruments). The measurement was performed in a nitrogen gas atmosphere at a temperature range of from -30 to 300°C, a rate of temperature increase of 5°C/min, an applied strain of 0.05%, and a frequency of 10 Hz. The measurement results as Tg are shown in Table 1 below.

**[Table 1]**

| | | Production Example 1 | Production Example 2 | Production Example 3 | Production Example 4 | Production Example 5 | Production Example 6 | Production Example 7 |
|---|---|---|---|---|---|---|---|---|
| Wood raw material | [-] | Eucalyptus wood flour | wood flour | Eucalyptus wood flour | Cedar wood flour | Cedar wood flour | Cedar wood flour | Cedar wood flour |
| Amount of wood raw material | [mg] | 200 | 400 | 800 | 200 | 400 | 800 | 400 |
| Dissolution temperature | [°C] | 50 | 50 | 50 | 50 | 50 | 50 | 50 |
| Dissolution time | [days] | 7 | 7 | 7 | 7 | 7 | 7 | 7 |
| Average film thickness | [µm] | 16 | 25 | 111 | 86 | 145 | 199 | 30 |
| Density | [g/cm³] | 1.05 | 1.05 | 0.83 | 0.30 | 0.27 | 0.30 | - |
| Contact angle | [degree] | 76 | - | - | 58 | - | - | - |
| Young's modulus | [MPa] | 3097 | - | - | 476 | - | - | - |
| Maximum stress | [MPa] | 61 | - | - | 5.5 | - | - | - |
| Maximum elongation | [%] | 3.2 | - | - | 1.1 | - | - | - |
| Tg | [°C] | 177 | - | - | n.d. | - | - | - |

### Production of Laminated Material

### Example 1

As a base material, a lumber remnant (4 cm × 5 cm) of Japanese red pine was prepared. The surface of this base material was polished by using abrasive paper #80-120, abrasive paper #100-120, and abrasive paper #120-240 in this order. The sheet material (2.5 cm × 3.5 cm) of Production Example 2 was laminated on the polished surface and pressurized (11 MPa) at 200°C for 10 minutes by using a hot press machine, and thus the laminated material of Example 1 was produced. It was visually confirmed that the sheet material and the base material were integrated after thermocompression-bonding, and that sheet material and the base material could not be peeled off.

### Examples 2 to 4

In Examples 2 to 4, the laminated materials of Examples 2 to 4 were produced in the same manner as in Example 1 except for using the sheet materials of Production Examples 3, 5, and 6. For all of the laminated materials, the results confirmed that the sheet material and the base material were integrated by thermocompression-bonding.

### Examples 5 to 120

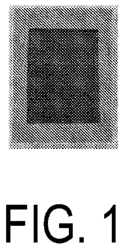

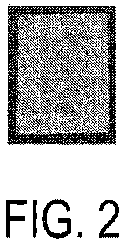

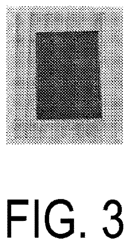

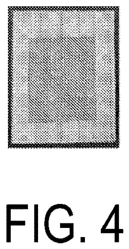

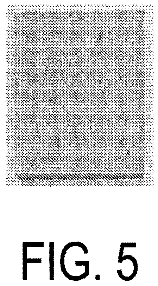

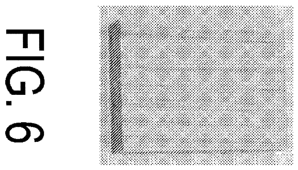

The laminated materials of Examples 5 to 120 were produced by using the materials of the base materials as listed in Table 2 below and using the sheet materials of Production Examples 2, 3, 5, and 6 as the base materials. The sizes and the conditions of thermocompression-bonding of the base material and the sheet material were as described in Example 1. Each of the resultant laminated materials was visually observed, and the result confirmed that the sheet material and the base material were integrated. Appearance photographs of the laminated materials of Examples 85, 87, 41, and 43 are shown in FIGS. 1 to 4. FIG. 5 is an appearance photograph of the base material (Japanese beech lumber remnant) used in Examples 85 and 87. FIG. 6 is an appearance photograph of the base material (Japanese cedar lumber remnant) used in Examples 41 and 43.

**[Table 2]**

| | Base material | | |
|---|---|---|---|
| | Name | Family/genus | Leaf morphology |
| Examples 1 to 4 | Red pine | Pinaceae Pinus | Softwood |
| Examples 5 to 8 | Eastern white pine | Pinaceae Pinus | Softwood |
| Examples 9 to 12 | Montrey pine | Pinaceae Pinus | Softwood |
| Examples 13 to 16 | Japanese larch | Pinaceae Larix | Softwood |
| Examples 17 to 20 | Yezo spruce | Pinaceae Picea | Softwood |
| Examples 21 to 24 | Spruce | Pinaceae Picea | Softwood |
| Examples 25 to 28 | Douglas fir | Pinaceae Pseudotsuga | Softwood |
| Examples 29 to 32 | Agathis | Araucariaceae Araucaria | Softwood |
| Examples 33 to 36 | Japanese cypress | Cupressaceae Chamaecyparis | Softwood |
| Examples 37 to 40 | Alaska cedar | Cupressaceae Chamaecyparis | Softwood |
| Examples 41 to 44 | Cedar | Cupressaceae Cryptomeria | Softwood |
| Examples 45 to 48 | Japanese yew | Taxaceae Taxus | Softwood |
| Examples 49 to 52 | Tulip tree | Magnoliaceae Liriodendron | Hardwood |
| Examples 53 to 56 | Japanese whitebark magnolia | Magnoliaceae Magnolia | Hardwood |
| Examples 57 to 60 | Camphor laurel | Lauraceae Cinnamomum | Hardwood |
| Examples 61 to 64 | Japanese elm | Ulmaceae Ulmus | Hardwood |
| Examples 65 to 68 | Elm | Ulmaceae Ulmus | Hardwood |
| Examples 69 to 72 | Walnut | Juglandaceae Juglans | Hardwood |
| Examples 73 to 76 | Japanese cherry birch | Betulaceae Betula | Hardwood |
| Examples 77 to 80 | Hornbeam | Betulaceae Carpinus | Hardwood |
| Examples 81 to 84 | Japanese chestnut | Fagaceae Castanea | Hardwood |
| Examples 85 to 88 | Beech | Fagaceae Fagus | Hardwood |
| Examples 89 to 92 | Mizunara | Fagaceae Quercus | Hardwood |
| Examples 93 to 96 | Oak | Fagaceae Quercus | Hardwood |
| Examples 97 to 100 | Kashi | Fagaceae Quercus | Hardwood |
| Examples 101 to 104 | Red oak | Fagaceae Quercus | Hardwood |
| Examples 105 to 108 | Balsa | Malvaceae Ochroma | Hardwood |
| Examples 109 to 112 | Maple | Aceraceae Acer | Hardwood |
| Examples 113 to 116 | Castor aralia | Araliaceae Kalopanax | Hardwood |
| Examples 117 to 120 | Princess tree | Paulowniaceae Paulownia | Hardwood |

### Scratch Test

The pencil hardness of the laminated material was measured in accordance with JIS K 5600-5-4 "Scratch hardness (Pencil method)". In detail, Mitsubishi Pencil Hi-uni (hardness: 6H, 5H, 4H, 3H, 2H, H, F, HB, B, 2B, 3B, 4B, 5B, and 6B) were prepared and each pencil was placed at an angle of 45 degrees with respect to a surface to which the sheet material of the laminated material was attached, and scratching was performed under a fixed load. A case where a black line was drawn by the pencil without breakage of the sheet material was evaluated as "passed", and a case where the sheet material was damaged, such as broken or turned up, was evaluated as "failed". Note that a case where the sheet material was not damaged even when the pencil got stuck in the sheet material and the sheet material was deformed in a recessed shape was evaluated as "passed". Among the hardnesses evaluated as passed, the hardest one was taken as the pencil hardness. A case where the hardness 6H was evaluated as passed was written as "hardness of 6H or harder", and a case where the hardness 6B was evaluated as failed was written as "softness of 6B or softer".

### Example 121

As a base material, a lumber remnant (4 cm × 5 cm) of Japanese beech was prepared. The surface of this base material was polished by using abrasive paper #80-120, abrasive paper #100-120, and abrasive paper #120-240 in this order. The sheet material (2.5 cm × 3.5 cm) of Production Example 2 was laminated on a polished surface and pressurized (11.2 MPa) at 200°C for 10 minutes by using a hot press machine, and thus a laminated material was produced. When the scratch test was performed for this laminated material, the pencil hardness was a hardness of 6H or harder.

### Examples 122 to 129

The laminated materials of Examples 122 to 129 were produced in the same manner as in Example 121 except for changing the base materials and the sheet materials to those listed in Table 3 below. The pencil hardnesses measured by the scratch test are shown in Table 3 below.

### Comparative Examples 1 to 4

The sheet materials of Production Examples 2, 3, 5, and 6 were used as is for the scratch test without hot pressing, and the pencil hardnesses were measured. The measurement results are shown in Table 3.

**[Table 3]**

| Examples | Base material | Sheet material | Pencil hardness |
|---|---|---|---|
| Example 121 | Beech | 2 w/v% Eucalyptus (Production Example 2) | Hardness of 6H or harder |
| Example 122 | Cedar | 2 w/v% Eucalyptus (Production Example 2) | 2H |
| Example 123 | Beech | 2 w/v% Japanese cedar (Production Example 5) | B |
| Example 124 | Cedar | 2 w/v% Japanese cedar (Production Example 5) | HB |
| Example 125 | Beech | 4 w/v% Eucalyptus (Production Example 3) | Hardness of 6H or harder |
| Example 126 | Cedar | 4 w/v% Eucalyptus (Production Example 3) | 2H |
| Example 127 | Beech | 4 w/v% Japanese cedar (Production Example 6) | Hardness of 6H or harder |
| Example 128 | Cedar | 4 w/v% Japanese cedar (Production Example 6) | Hardness of 6H or harder |
| Example 129 | Copper plate | 2 w/v% Japanese cedar (Production Example 5) | 2H |
| Comparative Example 1 | - | 2 w/v% Eucalyptus (Production Example 2) | 2H |
| Comparative Example 2 | - | 2 w/v% Japanese cedar (Production Example 5) | Softness of 6B or softer |
| Comparative Example 3 | - | 4 w/v% Eucalyptus (Production Example 3) | 2H |
| Comparative Example 4 | - | 4 w/v% Japanese cedar (Production Example 6) | Softness of 6B or softer |

As shown in Table 3, the results confirmed that all of the laminated materials of Examples 121 to 129 had the pencil hardness of B or higher. Furthermore, the comparison between Comparative Examples 1 to 4 and Examples 121 to 129 confirmed that harder pencil hardness was achieved by forming a laminated material by subjecting the sheet material to hot pressing.

### Example 130

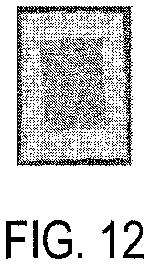

As a base material, corrugated cardboard was prepared. The surface of this base material was polished by using abrasive paper #1000. The sheet material (2.5 cm × 3.5 cm) of Production Example 2 was laminated on the polished surface and pressurized (1 t) at 180°C for 20 minutes by using a hot press machine, and thus the laminated material of Example 130 was produced. Each of the resultant laminated materials was visually observed, and the result confirmed that the sheet material and the base material were integrated. An appearance photograph of the laminated material of Example 130 is shown in FIG. 12.

### Examples 131 to 138

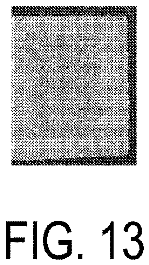

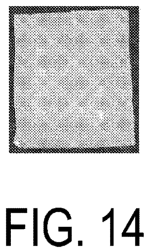

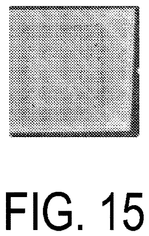

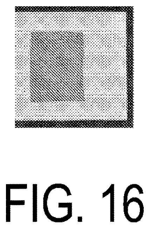

The laminated materials of Examples 131 to 138 were produced in the same manner as in Example 130 except for changing the types of the base materials and the sheet materials and the hot pressing conditions to those listed in Table 4 below. For all of the laminated materials, it was visually confirmed that the sheet material and the base material were integrated. Appearance photographs of the laminated materials of Examples 131, 133, 137, and 138 are shown in FIGS. 13 to 16.

**[Table 4]**

| | Base material | Sheet | Hot pressing conditions | | |
|---|---|---|---|---|---|
| | | | Pressing temperature | Load | TIME |
| Example 130 | Corrugated cardboard | 2 w/v% Eucalyptus (Production Example 2 | 180°C | 1 t | 20 minutes |
| Example 131 | Corrugated cardboard | 2 w/v% Japanese cedar (Production Example 5) | 200°C | 1 t | 15 minutes |
| Example 132 | Plastic shopping bag originated from sugarcane (polyethylene) | 2 w/v% Eucalyptus (Production Example 2 | 135°C | 1 t | 10 minutes |
| Example 133 | Plastic shopping bag originated from sugarcane (polyethylene) | 2 w/v% Japanese cedar (Production Example 5) | 130°C | 1 t | 10 minutes |
| Example 134 | Plastic shopping bag originated from corn (polylactic acid) | 2 w/v% Eucalyptus (Production Example 2 | 80°C | 1 t | 10 minutes |
| Example 135 | Plastic shopping bag originated from corn (polylactic acid) | 2 w/v% Japanese cedar (Production Example 5) | 60°C | 1 t | 10 minutes |
| Example 136 | Copper plate | 2 w/v% Japanese cedar (Production Example 5) | 200°C | 1 t | 15 minutes |
| Example 137 | Aluminum sheet | 2 w/v% Japanese cedar (Production Example 5) | 200°C | 1 t | 15 minutes |
| Example 138 | Interior decoration tile | 2 w/v% Japanese cedar (Production Example 5) | 200°C | 1 t | 15 minutes |

### Example 139

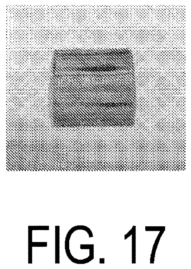

As the first base material and the second base material, boards produced by slicing Japanese cypress into a thickness of 0.7 mm (veneer; size of 3 cm × 3 cm) were prepared. The sheet material (thickness of 30 µm; size of 2 cm × 2 cm) of Production Example 7 was placed in between the first base material and the second base material and pressurized (1 t) at 200°C for 4 minutes by using a hot press machine, and thus the laminated material of Example 139 was produced. It was visually confirmed that the sheet material and the base material were integrated after thermocompression-bonding. Furthermore, it was confirmed that the first base material and the second base material were firmly bonded by interposing the sheet material therebetween and could not be peeled off. An appearance photograph of the laminated material of Example 139 is shown in FIG. 17.

### Examples 140 and 141

The laminated materials of Examples 140 and 141 were produced in the same manner as in Example 142 except for changing the load during hot pressing to 400 kg. It was visually confirmed that the sheet material and the base material were integrated after thermocompression-bonding, and that the first base material and the second base material were firmly bonded by interposing the sheet material therebetween and could not be peeled off. Furthermore, it was confirmed that deformation (reduction in thickness) due to thermocompression-bonding can be suppressed by changing the load during hot pressing from 1000 kg to 400 kg.

### Example 142

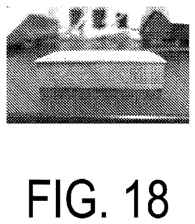

The laminated material of Example 142 was produced in the same manner as in Example 139 except for preparing a Japanese cedar wood piece (thickness of 1.0 cm; size of 4 cm × 5 cm) as the first base material and changing the hot pressing conditions to those listed in Table 5 below. It was visually confirmed that the sheet material and the base materials were integrated after thermocompression-bonding, and that the first base material and the second base material were firmly bonded by interposing the sheet material therebetween and could not be peeled off. An appearance photograph of a side face of the laminated material of Example 142 is shown in FIG. 18.

**[Table 5]**

| | First base material | Sheet material | Second base material | Hot pressing conditions | | | m) | |
|---|---|---|---|---|---|---|---|---|
| | | | | Temperature | Load | TIME | Before pressing | After pressing |
| Example 139 | Japanese cypress | 2 w/v% Japanese cedar (Production Example 7) | Japanese cypress | 200°C | 1000 kg | 4 minutes | 1410 | 696 |
| Example 140 | Japanese cypress | 2 w/v% Japanese cedar (Production Example 7) | Japanese cypress | 200°C | 400 kg | 4 minutes | 1410 | 1140 |
| Example 141 | Japanese cypress | 2 w/v% Japanese cedar (Production Example 7) | Japanese cypress | 200°C | 400 kg | 4 minutes | 1410 | 1220 |
| Example 142 | Japanese cedar wood piece | 2 w/v% Japanese cedar (Production Example 7) | Japanese cypress | 200°C | 400 kg | 4 minutes | 10700 | 10000 |

### Example 143

As a base material, a lumber remnant (4 cm × 5 cm) of Japanese beech was prepared. The surface of this base material was polished by using abrasive paper #80-120, abrasive paper #100-120, and abrasive paper #120-240 in this order. The sheet material (2.5 cm × 3.5 cm) of Production Example 8 was laminated on a polished surface and pressurized (5 MPa) at 90°C for 15 minutes by using a hot press machine, and thus the laminated material of Example 143 was produced.

### Example 144

The laminated material of Example 144 was produced by the same method as for Example 143 except for using a lumber remnant (4 cm × 5 cm) of Japanese cedar in place of the lumber remnant of Japanese beech as the base material.

### Example 145

The laminated material of Example 145 was produced by the same method as for Example 143 except for using the sheet material of Production Example 9 in place of the sheet material of Production Example 8 as the sheet material.

### Example 146

The laminated material of Example 146 was produced by the same method as for Example 144 except for using the sheet material of Production Example 9 in place of the sheet material of Production Example 8 as the sheet material.

### Example 147

The laminated material of Example 147 was produced by the same method as for Example 143 except for using the sheet material of Production Example 10 in place of the sheet material of Production Example 8 as the sheet material.

### Example 148

The laminated material of Example 148 was produced by the same method as for Example 144 except for using the sheet material of Production Example 10 in place of the sheet material of Production Example 8 as the sheet material.

For the laminated materials of Examples 143 to 148, it was visually confirmed that the sheet material and the base material were integrated after thermocompression-bonding, and that sheet material and the base material could not be peeled off. Furthermore, the laminated materials of Examples 143 to 148 had glossier appearance on the sheet material side and had undergone surface modification similarly to the laminated material which did not contain citric acid and in which the sheet material and the base material were integrated. Thus, excellent effects as the laminated material were achieved.

Thus, the sheet material containing the di- or higher valent fatty acid and/or an anhydride thereof can be integrated with the base material under milder conditions compared to a sheet material that does not contain the di- or higher valent fatty acid and/or an anhydride thereof. Furthermore, the laminated material in which the sheet material containing the di- or higher valent fatty acid and/or an anhydride thereof and the base material are integrated had undergone surface modification and had glossier appearance on the sheet material side as described above. Thus, the sheet material containing the di- or higher valent fatty acid and/or an anhydride thereof is significantly useful sheet material to produce a glossier laminated material under milder conditions.

As shown in Examples, according to the present disclosure, a laminated material in which a base material of various materials and a sheet material are integrated can be produced without use of a chemical agent such as an organic solvent or an adhesive agent. The technology of the present disclosure can be applied to surface modification of a molded article made of various materials, improvement in appearance of low-quality wood, and repair of a molded wood product deteriorated over time. Furthermore, the technology of the present disclosure can be applied as an adhesive agent that bonds components of various materials. From the above evaluation results, the superiority of the present disclosure is clear.

## Claims

1. A laminated material comprising:
a first base material; and
a sheet material laminated on and integrated with a surface of the first base material,
wherein
the first base material is made of a material selected from the group consisting of a biomass material, a plastic, a metal, a ceramic, a glass, a molded pulp, and a paper,
the sheet material is substantially made of a plant-derived component, and
the sheet material has an absorption peak in a region of 1715 to 1725 cm⁻¹ in an infrared absorption spectrum.

2. The laminated material according to claim 1, wherein the sheet material has a density of 0.2 g/cm³ or greater and 1.2 g/cm³ or less.

3. The laminated material according to claim 1 or 2, wherein the plant-derived component is one or two or more selected from the group consisting of cellulose, hemicellulose, and lignin.

4. The laminated material according to claim 3, wherein some or all of hydroxy groups contained in the cellulose, the hemicellulose, and the lignin are formylated.

5. The laminated material according to any one of claims 1 to 4, wherein the sheet material comprises a di- or higher valent fatty acid and/or an anhydride thereof.

6. The laminated material according to any one of claims 1 to 4, further comprising a second base material laminated and bonded to the first base material by interposing the sheet material between the first base material and the second base material,
wherein
the second base material is made of a material selected from the group consisting of a biomass material, a plastic, a metal, a ceramic, a glass, a molded pulp, and a paper.

7. A sheet material used for the laminated material described in any one of claims 1 to 6.

8. A method for producing the laminated material described in claim 1, the method comprising:
producing a lignocellulose solution by dissolving a plant raw material in an organic acid;
producing a sheet material substantially made of a plant-derived component by removing a liquid component from the lignocellulose solution; and
producing a laminated material including the sheet material integrated with the first base material by laminating the sheet material on a surface of the first base material, and thermocompression-bonding the sheet material and the first base material.

9. The method for producing a laminated material according to claim 8, the method further comprising polishing the first base material before the sheet material is laminated.

10. A method for producing the laminated material described in claim 6, the method comprising:
producing a lignocellulose solution by dissolving a plant raw material in an organic acid;
producing a sheet material substantially made of a plant-derived component by removing a liquid component from the lignocellulose solution; and
laminating and bonding the first base material and the second base material by placing the sheet material in between the first base material and the second base material, and thermocompression-bonding the sheet material, the first base material, and the second base material.

11. The method for producing a laminated material according to claim 10, the method further comprising polishing the first base material and the second base material before the sheet material is placed.

12. The method for producing a laminated material according to any one of claims 8 to 11, wherein the plant raw material is a woody biomass, a herbaceous biomass, or a mixture thereof.

13. The method for producing a laminated material according to any one of claims 8 to 12, wherein the organic acid is one or two or more selected from the group consisting of formic acid, glyoxylic acid, and pyruvic acid.

14. The method for producing a laminated material according to any one of claims 8 to 13, wherein a temperature at which the plant raw material is dissolved in the organic acid is 20°C or higher and 80°C or lower.

15. The method for producing a laminated material according to any one of claims 8 to 14, wherein a temperature of the thermocompression-bonding is 220°C or lower.

16. A method for modifying a surface of a molded article, the method comprising:
producing a lignocellulose solution by dissolving a plant raw material in an organic acid;
producing a sheet material substantially made of a plant-derived component by removing a liquid component from the lignocellulose solution; and
laminating the sheet material on a surface of a molded article, and thermocompression-bonding the sheet material and the molded article.

17. An adhesive agent comprising:
a lignocellulose solution produced by dissolving a plant raw material in an organic acid; and/or
a sheet material substantially made of a plant-derived component, the sheet material produced by removing a liquid component from the lignocellulose solution.

18. The adhesive agent according to claim 17, wherein the plant raw material is a woody biomass, a herbaceous biomass, or a mixture thereof.

19. The adhesive agent according to claim 17 or 18, wherein the sheet material comprises a di- or higher valent fatty acid and/or an anhydride thereof.

20. The adhesive agent according to any one of claims 17 to 19, wherein the organic acid is one or two or more selected from the group consisting of formic acid, glyoxylic acid, and pyruvic acid.

21. An adhesive agent comprising a lignocellulose solution produced by dissolving a plant raw material in an organic acid,
wherein
the lignocellulose solution comprises a plant-derived component,
the plant-derived component is one or two or more selected from the group consisting of cellulose, hemicellulose, and lignin, and
some or all of hydroxy groups contained in the cellulose, the hemicellulose, and the lignin are formylated.
